(19) Europäisches Patentamt
European Patent Office
Office européen des brevets

(11) **EP 3 804 849 A1**

(12) **EUROPEAN PATENT APPLICATION**
published in accordance with Art. 153(4) EPC

(43) Date of publication:
**14.04.2021 Bulletin 2021/15**

(21) Application number: **19807208.4**

(22) Date of filing: **23.05.2019**

(51) Int Cl.:
**B01J 23/50** (2006.01)    **C01B 3/40** (2006.01)

(86) International application number:
**PCT/JP2019/020543**

(87) International publication number:
**WO 2019/225715 (28.11.2019 Gazette 2019/48)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **23.05.2018 JP 2018098937**

(71) Applicant: **Tanaka Kikinzoku Kogyo K.K.
Tokyo 100-6422 (JP)**

(72) Inventors:
• **TAKANEZAWA Hidenori
Tsukuba-shi, Ibaraki 300-4247 (JP)**

• **KATO Shunsuke
Tsukuba-shi, Ibaraki 300-4247 (JP)**
• **KIKUHARA Shunji
Tsukuba-shi, Ibaraki 300-4247 (JP)**
• **KIKUCHI Koji
Tsukuba-shi, Ibaraki 300-4247 (JP)**
• **HARADA Nobuo
Tsukuba-shi, Ibaraki 300-4247 (JP)**
• **UNNO Tetsuya
Tsukuba-shi, Ibaraki 300-4247 (JP)**

(74) Representative: **Hoffmann Eitle
Patent- und Rechtsanwälte PartmbB
Arabellastraße 30
81925 München (DE)**

(54) **STEAM-REFORMING CATALYST**

(57)    An object of the present invention is to provide a novel and relatively inexpensive steam reforming catalyst wherein ammonia production is suppressed. The present invention relates to the steam reforming catalyst used for reforming of a hydrocarbon-based fuel containing a nitrogen gas, containing a support and a metal catalyst supported on the support and composed of an alloy containing ruthenium and silver.

EP 3 804 849 A1

**Description**

TECHNICAL FIELD

The present invention relates to a steam reforming catalyst, particularly, a steam reforming catalyst for converting a hydrocarbon-based fuel to a mixed gas containing carbon monoxide and hydrogen by a steam reforming reaction.

BACKGROUND ART

Hydrogen is used as a fuel for fuel cells, for example, a polymer electrolyte fuel cell (PEFC). As one of industrial production methods for hydrogen, there is a method of steam-reforming a hydrocarbon-based fuel such as natural gas and city gas, *etc.* In the method of steam-reforming a hydrocarbon-based fuel, a steam reforming catalyst is used, and a hydrocarbon is converted to a hydrogen-rich reformed gas through a reforming reaction with water vapor.

As the steam reforming catalyst, a catalyst obtained by loading nickel and ruthenium on an appropriate support composed of a metal oxide such as alumina (aluminum oxide) is used.

However, when nitrogen is contained in a hydrocarbon-based fuel gas, ammonia is produced from hydrogen generated by reforming and the nitrogen, and this acts as a hindrance to the fuel cell reaction. As a technique for reducing such ammonia production, there has been proposed a method where a catalyst obtained by loading either platinum or rhodium or both is used for the steam reforming catalyst (Patent Literatures 1 and 2).

In addition, a method where ammonia in a hydrogen-rich gas obtained by reforming a nitrogen-containing raw fuel or a mixture containing a raw fuel and nitrogen is removed by means of an ammonia remover has been proposed (Patent Literature 3).

BACKGROUND ART LITERATURE

PATENT LITERATURE

Patent Literature 1: JP-A-2005-174783
Patent Literature 2: JP-A-2003-146615
Patent Literature 3: JP-A-2003-031247

SUMMARY OF INVENTION

TECHNICAL PROBLEM

However, in recent years, a demand for cost reduction of a fuel cell is increasing and from this viewpoint, it is also desired not to use an expensive noble metal material such as platinum and rhodium for a material used in the steam reforming catalyst.

In addition, although an expensive noble metal material is not used in the technique disclosed in Patent Literature 3, an ammonia remover is used and therefore, the system is complicated.

In consideration of these circumstances, an object of the present invention is to provide a steam reforming catalyst composed of a relatively inexpensive ruthenium and capable of reducing ammonia production.

SOLUTION TO PROBLEM

In order to attain the object above, one aspect of the present invention relates to a steam reforming catalyst used for reforming of a hydrocarbon-based fuel containing a nitrogen gas, including a support and a metal catalyst supported on the support and composed of an alloy containing ruthenium and silver.

The inventors of the present invention made intensive studies so as to solve the problems above. As a result, it was found that when ruthenium is used alone as a metal catalyst in the steam reforming catalyst, an adsorption reaction of hydrogen and nitrogen occurs at an active site, *etc.* of the ruthenium and ammonia is produced through the reaction. Then, the inventors of the present invention have made additional studies, as a result, it has been found that when silver is further incorporated into the ruthenium to construct a metal catalyst composed of an alloy containing ruthenium and silver and the metal catalyst is supported on a support to form a steam reforming catalyst, dissociation of nitrogen at an active site acting on dissociation and adsorption of nitrogen (hereinafter, sometimes simply referred to as "active site") can be suppressed and in turn, production of ammonia can be reduced.

Accordingly, in the steam reforming catalyst of the present invention, dissociation of nitrogen at an active site of ruthenium, which causes ammonia production, is greatly suppressed, so that an active steam reforming catalyst with reduced ammonia production can be provided.

JP-A-2004-82034 discloses a steam reforming catalyst in which ruthenium and silver, *etc.* are supported on a support. However, the catalyst is a steam reforming catalyst used for the reforming of hydrocarbon compounds containing a sulfur component as an essential component at a relatively high concentration of about several tens of ppm and provides a stable reaction system by improving the sulfur poisoning stability. On the other hand, the steam reforming catalyst according to the present invention is a catalyst used for the reforming of a hydrocarbon-based fuel containing a nitrogen gas, and its use and effects are completely different. However, it is not precluded to use the steam reforming catalyst of the present invention for reforming of a hydrocarbon-based fuel containing sulfur as an unavoidable impurity.

Furthermore, in one example of the present invention, an $\alpha$-alumina can be used as the support. In this case, when the above-described metal catalyst is supported, a catalytic activity of the metal catalyst, i.e., the steam reforming catalyst, can be maintained high and also when the steam reforming catalyst is disposed under a high temperature, the catalytic activity can be maintained high, so that a durability can be kept high.

EFFECTS OF INVENTION

According to the present invention, steam reforming with reduced ammonia production can be performed using a relatively inexpensive catalyst.

BRIEF DESCRIPTION OF DRAWINGS

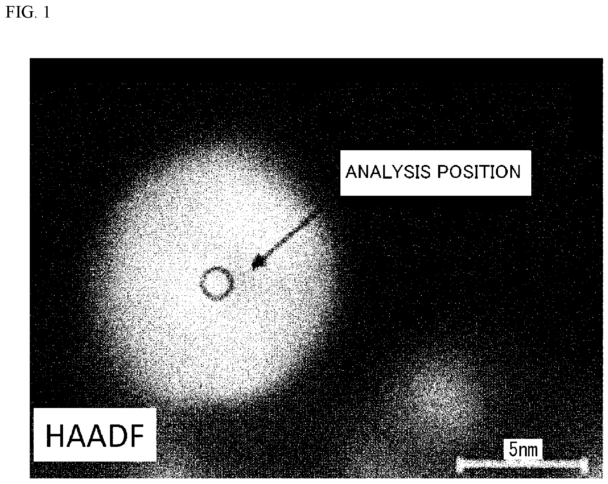

[Fig. 1] Fig. 1 is an STEM-EDX image of a metal catalyst particle in one embodiment of the steam reforming catalyst of the present invention.

DESCRIPTION OF EMBODIMENTS

The present invention is described in detail below based on embodiments.

In this connection, in the present description, "to" expressing a numerical range means to be not less than the lower limit value and not more than the upper limit value.

(Metal Catalyst)

In this embodiment, the metal catalyst constituting the steam reforming catalyst must be composed of an alloy of ruthenium (Ru) and silver (Ag). Silver has a large electron affinity, compared with ruthenium, and therefore, in the metal catalyst of this embodiment where an alloy is formed by ruthenium and silver, part of electrons of ruthenium have moved to silver, leading to a decrease in the electron density of ruthenium. Consequently, dissociation of nitrogen ($N_2$) at an active site of ruthenium is suppressed, so that an active steam reforming catalyst with reduced ammonia production can be provided.

In this connection, in the metal catalyst of this embodiment, although ruthenium and silver form an alloy, that is, each is present in a metal state, as long as the effects of the present invention are shown, these may be partially present as ruthenium oxide or silver oxide.

In addition, as long as the effects of the present invention are shown, the metal catalyst composed of an alloy containing ruthenium and silver may contain rhodium, nickel, cobalt, lanthanum, platinum, *etc.,* in addition to ruthenium and silver.

Furthermore, as long as the effects of the present invention are shown, the steam reforming catalyst of this embodiment may contain a metal catalyst free from an alloy containing ruthenium and silver and, for example, may contain a metal catalyst composed of only ruthenium or a metal catalyst composed of only silver.

The manner of how an alloy is formed by ruthenium and silver in the metal catalyst of this embodiment is not particularly limited, and, for example, the form may be a solid solution, may be a eutectic crystal, or may be an intermetallic compound. In order to obtain the above-described effect of reduction of ammonia generation, the reduction may be achieved if ruthenium and silver are in close proximity to each other to such an extent that exchange of electrons is possible, that is, if both ruthenium and silver are present in one metal catalyst particle.

Although the method for producing the metal catalyst composed of an alloy containing ruthenium and silver is not particularly limited, the metal catalyst can be obtained, for example, by the following method.

More specifically, firstly, a precursor solution containing both ruthenium ions and silver ions is produced. As the precursor solution, for example, a mixed solution of an aqueous ruthenium nitrate solution and an aqueous silver nitrate solution may be used. Next, the precursor solution is impregnated onto a support, dried and then subjected to hydrogen reduction, whereby a steam reforming catalyst in which a metal catalyst composed of an alloy containing ruthenium and silver is supported on a support can be obtained.

Formation of an alloy by ruthenium and silver in the metal catalyst can be confirmed by various methods, and the fact that both ruthenium and silver are contained in one particle can be confirmed using, for example, STEM-EDX.

In addition, formation of an alloy by ruthenium and silver can also be confirmed by observing a peak shift by means of XPS. Specifically, for example, as described in the paragraph of Examples, the formation can be confirmed by observing a spectrum of Ru3d orbit. In the case where an alloy is formed by ruthenium and silver, as described above, part of electrons of ruthenium have moved to silver, and due to this, the position of the peak top of Ru3d orbit shifts to a high energy side. Accordingly, formation of an alloy by ruthenium and silver can be confirmed by confirming that the position of the peak top of Ru3d orbit is shifted to the high energy side, compared with a case where the metal catalyst is composed of ruthenium alone. The peak shift width is preferably 0.05 eV or more and in this case, an alloy can be thought to be formed. The peak shift width is more preferably 0.1 eV or more.

A ratio of a content (at%) of silver to a content (at%) of ruthenium (hereinafter, sometimes referred to as (Ag/Ru)) in the metal catalyst is preferably from 0.01 to 0.2, more preferably from 0.01 to 0.1, and most preferably from 0.01 to 0.06. Within this range, dissociation of nitrogen at an active site of ruthenium can be effectively suppressed and in turn, ammonia production can be effectively reduced.

In this connection, (Ag/Ru) is determined by point analysis of STEM-EDX and, specifically, is determined by randomly performing extraction of 10 metal catalyst particles in the steam reforming catalyst, measuring a ruthenium content and a silver content on each particle by point analysis of STEM-EDX to obtain (Ag/Ru), and taking an average thereof.

Furthermore, in the metal catalyst, it is preferred that the amount of ruthenium is from 83.0 to 98.8 at% and the amount of silver is from 17.0 to 1.2 at%, and it is more preferred that the amount of ruthenium is from 90.9 to 98.8 at% and the amount of silver is from 9.1 to 1.2 at%. Also in this case, dissociation of nitrogen at an active site of ruthenium can be effectively suppressed and in turn, ammonia production can be effectively reduced.

(Support)

The material of the support of the steam reforming catalyst of this embodiment is not particularly limited as long as the above-described metal catalyst can be supported thereon, and examples thereof include a unary oxide, e.g., an oxide of an alkali metal such as lithium, sodium, potassium and cesium, an oxide of an alkaline earth metal such as magnesium, calcium, strontium and barium, an oxide of a periodic table Group IIIA metal such as scandium and yttrium, an oxide of a rare earth metal such as lanthanum, cerium, praseodymium, neodymium, samarium, europium, gadolinium, terbium, dysprosium, holmium, erbium, thulium, ytterbium and lutetium, an oxide of a periodic table Group IVA metal such as titanium, zirconium and hafnium, an aluminum oxide, and a silicon oxide.

Among these, an aluminum oxide (alumina) is preferably used and in particular, α-alumina can be preferably used. Because, when the above-described metal catalyst is supported on a support composed of α-alumina, a catalytic activity of the steam reforming catalyst can be maintained high and even if the steam reforming catalyst is disposed under high temperature, its catalytic activity can be maintained high, by which an excellent durability is shown.

In addition, a mixed oxide obtained by mixing two or more kinds of these oxides at any ratio can also be used as the material of a support of the steam reforming catalyst of this embodiment, and, for example, an oxide (mixed oxide) of a binary metal such as magnesium-titanium, calcium-titanium, strontium-titanium, barium-titanium, magnesium-zirconium, calcium-zirconium, strontium-zirconium, barium-zirconium, magnesium-aluminum, calcium-aluminum, strontium-aluminum, barium-aluminum, yttrium-aluminum, titanium-aluminum, zirconium-aluminum, cerium-aluminum, magnesium-silicon, calcium-silicon, strontium-silicon, barium-silicon, yttrium-silicon, titanium-silicon, zirconium-silicon, hafnium-silicon, aluminum-silicon, magnesium-cerium, calcium-cerium, strontium-cerium, and barium-cerium can be favorably used.

Among these, in particular, a mixed oxide of an alkaline earth metal oxide and alumina, composed of a combination of metals such as magnesium-aluminum, calcium-aluminum, strontium-aluminum and barium-aluminum, a mixed oxide of a lanthanoid metal oxide and alumina, composed of a combination of metals such as cerium-aluminum, a mixed oxide of zirconia and alumina, *etc.* are favorably used.

Furthermore, an oxide (mixed oxide) of a ternary system such as magnesium-calcium-titanium, magnesium-barium-titanium, magnesium-yttrium-titanium, magnesium-zirconium-titanium, magnesium-cerium-titanium, calcium-barium-titanium, calcium-yttrium-titanium, calcium-zirconium-titanium, calcium-cerium-titanium, barium-yttrium-titanium, magnesium-calcium-zirconium, magnesium-barium-zirconium, magnesium-yttrium-zirconium, magnesium-cerium-zirconium, calcium-barium-zirconium, calcium-yttrium-zirconium, calcium-cerium-zirconium, barium-yttrium-zirconium, barium-titanium-zirconium, magnesium-calcium-aluminum, magnesium-barium-aluminum, magnesium-yttrium-aluminum, magnesium-titanium-aluminum, magnesium-zirconium-aluminum, magnesium-cerium-aluminum, calcium-barium-aluminum, calcium-yttrium-aluminum, calcium-titanium-aluminum, calcium-zirconium-aluminum, calcium-cerium-aluminum, barium-yttrium-aluminum, barium-titanium-aluminum, barium-zirconium-aluminum, barium-cerium-aluminum, yttrium-titanium-aluminum, yttrium-zirconium-aluminum, titanium-zirconium-aluminum, magnesium-calcium-silicon, magnesium-barium-silicon, magnesium-yttrium-silicon, magnesium-titanium-silicon, magnesium-zirconium-silicon, magnesium-cerium-silicon, magnesium-aluminum-silicon, calcium-barium-silicon, calcium-yttrium-silicon, calcium-titanium-silicon, calcium-zirconium-silicon, calcium-cerium-silicon, calcium-aluminum-silicon, barium-yttrium-silicon, barium-titanium-silicon, barium-zirconium-silicon, barium-cerium-silicon, barium-aluminum-silicon, yttrium-titanium-silicon, yttrium-zirconium-silicon, yttrium-aluminum-silicon, yttrium-cerium-silicon, titanium-zirconium-silicon, titanium-aluminum-silicon, titanium-cerium-silicon, zirconium-aluminum-silicon, zirconium-cerium-silicon, and aluminum-cerium-silicon can be favorably used.

Among these, in particular, for example, a mixed oxide consisting of an oxide of an alkaline earth metal such as magnesium, calcium and barium, an oxide of a lanthanoid metal such as cerium, and alumina, or a mixed oxide consisting of an oxide of an alkaline earth metal such as magnesium, calcium and barium, zirconia, and alumina, is favorably used.

In addition, a support using a natural product such as zeolite can also be used.

The form of the support or steam reforming catalyst is not particularly limited, and, for example, a support obtained through tablet forming, pulverizing and granulating to an appropriate range, a support obtained by extrusion molding, and a support which is powder or is formed into an appropriate shape such as sphere, ring, tablet, pellet, cylinder, flake, *etc.,* may be used. In addition, a support or catalyst formed into a honeycomb shape may also be used.

(Steam Reforming Catalyst)

The steam reforming catalyst of this embodiment is a steam reforming catalyst characterized by having the above-described support and the above-described metal catalyst. The steam reforming catalyst of this embodiment can be produced, for example, by the above-described method.

(Hydrocarbon-Based Fuel)

The hydrocarbon-based fuel subjected to a steam reforming reaction using the steam reforming catalyst of this embodiment contains a nitrogen gas and an organic compound. The organic compound is preferably an organic compound having a carbon number of 1 to 40, and more preferably having a carbon number of 1 to 30. Specifically, the organic compound includes a saturated aliphatic hydrocarbon, an unsaturated aliphatic hydrocarbon, an aromatic hydrocarbon, *etc.,* and with respect to the saturated aliphatic hydrocarbon and unsaturated aliphatic hydrocarbon, the compound can be used regardless of whether it is chainlike or cyclic. With respect to the aromatic hydrocarbon, the compound can also be used regardless of whether it is monocyclic or polycyclic. These hydrocarbon compounds can contain a substituent. As the substituent, both chainlike and cyclic can be used, and examples thereof include an alkyl group, a cycloalkyl group, an aryl group, an alkyl aryl group, and an aralkyl group, *etc.* In addition, these hydrocarbons may be substituted by a substituent containing a heteroatom, such as hydroxy group, alkoxy group, hydroxycarbonyl group, alkoxycarbonyl group and formyl group.

Specifically, the hydrocarbon compounds include a saturated aliphatic hydrocarbon such as methane, ethane, propane, butane, pentane, hexane, dodecane, tridecane, tetradecene, pentadecane, hexadecane, heptadecene, octadecane, nonadecene, and eicosene, *etc.,* an unsaturated aliphatic hydrocarbon such as ethylene, propylene, butene, pentene, hexane, *etc.,* a cyclic hydrocarbon such as cyclopentane, cyclohexane, *etc.,* and an aromatic hydrocarbon such as benzene, toluene, xylene, naphthalene, *etc.* In addition, a mixture of these can be favorably used, and for example, an industrially inexpensively available material, such as natural gas, LPG, naphtha, gasoline, kerosene and light oil, may also be exemplified. Furthermore, specific examples of the hydrocarbon compounds having a substituent containing a heteroatom include methanol, ethanol, propanol, butanol, dimethyl ether, phenol, anisole, acetaldehyde, and acetic acid, *etc.*

In this connection, the hydrocarbon-based fuel may contain hydrogen, water, carbon dioxide, carbon monoxide, oxygen, *etc.,* as long as they do not affect the steam reforming reaction.

The catalyst of this embodiment can perform steam reforming with reduced ammonia production even when a hydrocarbon-based fuel containing a large amount of nitrogen is used. For example, even when a content of nitrogen in gas components after removing water vapor from all gas components which are introduced into the catalyst and used for the steam reforming, and removing organic compounds in the hydrocarbon-based fuel is 50 vol% or more, an effect of ammonia suppression is obtained, and above all, even when the content of nitrogen is from 80 to 100 vol%, a dramatic effect of ammonia suppression is obtained, compared with conventional catalysts.

EXAMPLES

Although the present invention is described specifically below by referring to Examples, the present invention is not limited thereto.

Firstly, a precursor solution was obtained by mixing a silver nitrate crystal dissolved in deionized water and a ruthenium nitrate solution such that contents of silver and ruthenium in a finally obtained steam reforming catalyst became the content shown in the column of Type of Catalyst of Table 1 (content (wt%) of ruthenium or silver in the steam reforming catalyst including the support). Next, an $\alpha$-alumina pellet support was impregnated with the precursor solution. Subsequently, the pellet was dried at 120°C and then subjected to hydrogen reduction to obtain steam reforming catalysts of Examples 1 to 3 (hereinafter, sometimes simply referred to as "catalyst").

Thereafter, 15 mL of the catalyst was placed in a normal-pressure fixed-bed flow reactor, a methane ($CH_4$) gas and pure water ($H_2O$) were fed into the reactor by adjusting SV to 13,500 $h^{-1}$ and a steam/carbon ratio (S/C) to 2.0, and the conversion rate of methane gas at the outlet was determined by holding the electric furnace for heating the catalyst at 750°C. In this connection, since the presence or absence of nitrogen in the gas does not affect a methane conversion rate, the methane conversion rate was evaluated by a conversion rate for a gas free from nitrogen.

In addition, using a $CH_4$ gas containing 25 vol% of nitrogen ($N_2$) as a raw material, the raw material gas and pure water ($H_2O$) were fed into the reactor by adjusting SV to 5,000 $h^{-1}$ and S/C to 2.7, and the amount of ammonia gas generated at the outlet was determined by holding the electric furnace for heating the catalyst at 750°C. Out of all gas components used for steam reforming, in the gas components excluding water vapor ($H_2O$) and methane ($CH_4$), a content of nitrogen before being introduced into the catalyst is 99.995 vol%.

A conversion rate of methane gas was derived from concentrations (vol%) of carbon monoxide (CO), carbon dioxide ($CO_2$) and methane in the reactor outlet gas according to the following formula. In the formula, [CO]out represents the concentration (vol%) of carbon monoxide, [$CO_2$]out represents the concentration (vol%) of carbon dioxide, and [$CH_4$] out represents the concentration (vol%) of methane. The measured values are shown in Table 1.

$$\text{Methane conversion rate} = ([CO]out+[CO_2]out)/([CH_4]out+[CO]out+[CO_2]out))\times100$$

In addition, the amount of ammonia gas generated was measured at the reactor outlet by absorbing ammonia using a boric acid solution and using indophenol blue absorptiometry. The measured values are shown in Table 1. In Table 1, "ND" means that the $NH_3$ production amount was less than the detection limit value.

In the metal catalyst particle composed of ruthenium and silver, contents (at%) of ruthenium and silver and a content ratio (Ag/Ru) of ruthenium and silver were determined by point analysis of STEM-EDX. In the measurement, the metal catalyst particle in the catalyst was randomly extracted 10 times in each Example, and an average of the obtained (Ag/Ru) values was taken. The results are shown in Table 1. In this connection, an analysis position was the center of a circumscribed circle of the metal catalyst particle, and a target of analysis was a particle in which metal elements of both ruthenium and silver are detected at the analysis position. Fig. 1 illustrates an example of the STEM-EDX image of the metal catalyst particle.

Here, as shown in Table 1, it was confirmed that at all measurement points, the metal catalyst particle contains both ruthenium and silver, i.e., is composed of an alloy of ruthenium and silver.

(Comparative Example 1)

An aqueous precursor solution containing a ruthenium nitrate solution was prepared in the same manner as in Examples without using silver nitrate, and an $\alpha$-alumina pellet support was impregnated with the precursor solution. Subsequently, the pellet was dried at 120°C and then subjected to hydrogen reduction to obtain a steam reforming catalyst in which a metal catalyst composed of ruthenium is supported on $\alpha$-alumina. In this connection, the measurements of the conversion rate of methane gas and the amount of ammonia gas generated were performed in the same manner as in Examples.

(Comparative Example 2)

An aqueous precursor solution containing silver nitrate crystals was prepared in the same manner as in Examples without using ruthenium nitrate solution, and an $\alpha$-alumina pellet support was impregnated with the precursor solution. Subsequently, the pellet was dried at 120°C and then subjected to hydrogen reduction to obtain a steam reforming catalyst in which a metal catalyst composed of silver (Ag) is supported on $\alpha$-alumina. In this connection, the measurements of the conversion rate of methane gas and the amount of ammonia gas generated were performed in the same manner as in Examples.

[Table 1]

Table 1

| | | Type of Catalyst | Ru (at%) | Ag (at%) | Ag/Ru | Ag/Ru (average value) | CH$_4$ Conversion Rate (%) | NH$_3$ Production Amount (mol ppm) |
|---|---|---|---|---|---|---|---|---|
| Example 1 | Measurement 1-1 | metal catalyst: Ru (0.44 wt%) Ag (0.05 wt%) support: $\alpha$-Al$_2$O$_3$ | 98.2 | 1.9 | 0.02 | 0.026 | 62.1 | 2.6 |
| | Measurement 1-2 | | 98.4 | 1.6 | 0.02 | | | |
| | Measurement 1-3 | | 98.8 | 1.2 | 0.01 | | | |
| | Measurement 1-4 | | 98.4 | 1.6 | 0.02 | | | |
| | Measurement 1-5 | | 98.0 | 2.0 | 0.02 | | | |
| | Measurement 1-6 | | 94.7 | 5.3 | 0.06 | | | |
| | Measurement 1-7 | | 98.0 | 2.0 | 0.02 | | | |
| | Measurement 1-8 | | 97.6 | 2.4 | 0.02 | | | |
| | Measurement 1-9 | | 94.6 | 5.4 | 0.06 | | | |
| | Measurement 1-10 | | 97.9 | 2.2 | 0.02 | | | |

(continued)

| | | Type of Catalyst | Ru (at%) | Ag (at%) | Ag/Ru | Ag/Ru (average value) | CH₄ Conversion Rate (%) | NH₃ Production Amount (mol ppm) |
|---|---|---|---|---|---|---|---|---|
| Example 2 | Measurement 2-1 | metal catalyst: Ru (0.43 wt%) Ag (0.46 wt%) support: α-Al₂O₃ | 90.9 | 9.1 | 0.10 | 0.054 | 63.4 | 3.4 |
| | Measurement 2-2 | | 96.2 | 3.8 | 0.04 | | | |
| | Measurement 2-3 | | 96.8 | 3.3 | 0.03 | | | |
| | Measurement 2-4 | | 93.3 | 6.7 | 0.07 | | | |
| | Measurement 2-5 | | 95.6 | 4.4 | 0.05 | | | |
| | Measurement 2-6 | | 96.1 | 3.9 | 0.04 | | | |
| | Measurement 2-7 | | 95.4 | 4.6 | 0.05 | | | |
| | Measurement 2-8 | | 92.8 | 7.2 | 0.08 | | | |
| | Measurement 2-9 | | 96.2 | 3.9 | 0.04 | | | |
| | Measurement 2-10 | | 95.7 | 4.3 | 0.04 | | | |
| Example 3 | Measurement 3-1 | metal catalyst: Ru (0.44 wt%) Ag (0.05 wt%) support: α-Al₂O₃ | 98.5 | 1.5 | 0.02 | 0.018 | 62.5 | 5.1 |
| | Measurement 3-2 | | 98.6 | 1.4 | 0.01 | | | |
| | Measurement 3-3 | | 98.4 | 1.6 | 0.02 | | | |
| | Measurement 3-4 | | 98.8 | 1.2 | 0.01 | | | |
| | Measurement 3-5 | | 96.2 | 3.9 | 0.04 | | | |
| | Measurement 3-6 | | 98.2 | 1.8 | 0.02 | | | |
| | Measurement 3-7 | | 98.7 | 1.3 | 0.01 | | | |
| | Measurement 3-8 | | 98.3 | 1.7 | 0.02 | | | |
| | Measurement 3-9 | | 98.3 | 1.7 | 0.02 | | | |
| | Measurement 3-10 | | 98.4 | 1.6 | 0.02 | | | |

(continued)

| | | Type of Catalyst | Ru (at%) | Ag (at%) | Ag/Ru | Ag/Ru (average value) | CH$_4$ Conversion Rate (%) | NH$_3$ Production Amount (mol ppm) |
|---|---|---|---|---|---|---|---|---|
| Comparative Example 1 | | metal catalyst: Ru (0.43 wt%) support: $\alpha$-Al$_2$O$_3$ | 100 | - | - | - | 64.5 | 30.8 |
| Comparative Example 2 | | metal catalyst: Ag (0.23 wt%) support: $\alpha$-Al$_2$O$_3$ | - | 100 | - | - | 0.2 | ND |

As shown in Table 1, all of the steam reforming catalysts of Examples 1 to 3 exhibited a high methane gas conversion rate and produced less ammonia gas.

On the other hand, the steam reforming catalyst of Comparative Example 1 having supported therein a metal catalyst composed of only ruthenium produced a large amount of ammonia gas.

In addition, the steam reforming catalyst of Comparative Example 2 having supported therein a metal catalyst composed of only silver exhibited a low methane conversion rate.

Subsequently, in order to confirm the formation of an alloy by ruthenium and silver in the metal catalyst by XPS measurement, the following XPS measurement was performed on the catalyst of Example 1. Furthermore, XPS measurement was performed in the same manner also on the catalyst of Comparative Example 1.

<XPS Measurement>

Each of the catalysts of Example 1 and Comparative Example 1 was ground in an agate mortar, and a spectrum of Ru3d orbit was obtained by performing XPS measurement under the following conditions.

In the case of the steam reforming catalyst of Comparative Example 1 having only a metal catalyst composed of ruthenium alone, the position of the peak top of Ru3d3/2 was 284.08 eV, and the position of the peak top of Ru3d5/2 was 279.88 eV.

On the other hand, in the case of the steam reforming catalyst of Example 1, the position of the peak top of Ru3d3/2 was 284.28 eV, the position of the peak top of Ru3d5/2 was 279.98 eV, and thus, the position was shifted to the high energy side from the position of the peak top of Comparative Example 1 by 0.2 eV in Ru3d3/2 and by 0.1 eV in Ru3d5/2.

It could be confirmed also from these results that in the metal catalyst of the steam reforming catalyst of Example 1, an alloy was formed by ruthenium and silver.

(XPS Measurement Conditions)

- Analyzer: K-Alpha+, manufactured by Thermo Fisher Scientific
- Irradiated X-ray: single crystal spectrum AlK$\alpha$ ray
- X-ray spot system: 400 $\mu$m$\times$800 $\mu$m (elliptical shape)
- Neutralizing electron gun: used
- Peak position correction: The peak top position of Al2p was corrected as 74.0 eV.

In addition, XPS measurement was performed in the same manner on the catalyst of Example 3, as a result, also in the case of the steam reforming catalyst of Example 3, the position was shifted to the high energy side from the position of the peak top of Comparative Example 1 by 0.2 eV in Ru3d3/2 and by 0.1 eV in Ru3d5/2.

In the foregoing pages, although certain embodiments have been described, these embodiments are presented by way of example and are not intended to limit the scope of the inventions. These novel embodiments can be implemented in a variety of other forms, and various omissions, substitutions and changes can be made without departing from the gist of the invention. These embodiments and modifications thereof are included in the scope or gist of the invention and are encompassed by the scope of the invention described in claims and equivalents thereof.

While the invention has been described in detail and with reference to specific embodiments thereof, it will be apparent to one skilled in the art that various changes and modifications can be made therein without departing from the spirit and scope of the invention. This application is based on Japanese Patent Application (Japanese Patent Application No. 2018-98937) filed on May 23, 2018, and the entirety of which is incorporated herein by reference. All references cited are incorporated herein in their entirety.

## Claims

1. A steam reforming catalyst used for reforming of a hydrocarbon-based fuel containing a nitrogen gas, comprising a support and a metal catalyst supported on the support and composed of an alloy containing ruthenium and silver.

2. The steam reforming catalyst according to claim 1, wherein a ratio of a content (at%) of the silver to a content (at%) of the ruthenium is from 0.01 to 0.2.

3. The steam reforming catalyst according to claim 1 or 2, wherein the support comprises $\alpha$-alumina.

FIG. 1

## INTERNATIONAL SEARCH REPORT

| | International application No. |
|---|---|
| | PCT/JP2019/020543 |

| A. CLASSIFICATION OF SUBJECT MATTER |
|---|
| Int.Cl. B01J23/50(2006.01)i, C01B3/40(2006.01)i |
| |
| According to International Patent Classification (IPC) or to both national classification and IPC |

| B. FIELDS SEARCHED |
|---|
| Minimum documentation searched (classification system followed by classification symbols) |
| Int.Cl. B01J23/50, C01B3/40 |

| Documentation searched other than minimum documentation to the extent that such documents are included in the fields searched |
|---|
| Published examined utility model applications of Japan      1922–1996 |
| Published unexamined utility model applications of Japan      1971–2019 |
| Registered utility model specifications of Japan      1996–2019 |
| Published registered utility model applications of Japan      1994–2019 |

| Electronic data base consulted during the international search (name of data base and, where practicable, search terms used) |
|---|
| JSTPlus/JST7580/JSTChina (JDreamIII) |

| C. DOCUMENTS CONSIDERED TO BE RELEVANT |
|---|

| Category* | Citation of document, with indication, where appropriate, of the relevant passages | Relevant to claim No. |
|---|---|---|
| X | WO 2017/130937 A1 (TODA KOGYO CORP.) 03 August 2017, paragraphs [0026]-[0028], [0076], [0103], [0122] & EP 3409361 A1, paragraphs [0020]-[0022], [0070], [0097], [0115] | 1-3 |
| X | JP 2005-185989 A (IDEMITSU KOSAN CO., LTD.) 14 July 2005, claims, paragraphs [0012]-[0014], [0030], [0034], [0040] (Family: none) | 1-3 |
| X | JP 2004-82034 A (NIPPON OIL CORPORATION) 18 March 2004, claims, paragraphs [0011], [0017]-[0021], [0043] (Family: none) | 1-3 |
| A | JP 60-147242 A (TOKYO GAS CO., LTD.) 03 August 1985, claims, page 2, upper right column, line 7 to page 3, lower left column, line 2, table 1 (Family: none) | 1-3 |

| ☐   Further documents are listed in the continuation of Box C. | ☐   See patent family annex. |
|---|---|

| *   Special categories of cited documents: | "T"   later document published after the international filing date or priority date and not in conflict with the application but cited to understand the principle or theory underlying the invention |
|---|---|
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| 17 July 2019 (17.07.2019) | 30 July 2019 (30.07.2019) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005174783 A
- JP 2003146615 A
- JP 2003031247 A
- JP 2004082034 A
- JP 2018098937 A